# EUROPEAN PATENT APPLICATION

(11) **EP 2 960 751 A1**
(43) Date of publication of application: **30.12.2015**
(21) Application number: 14189605.0
(22) Date of filing: 21.10.2014
(51) Int. Cl.: G06F 3/023, G06F 3/038, G06F 3/0354

(54) **Input system**

(30) Priority: 27.06.2014 TW 103211459
(71) Applicant: Giga-Byte Technology Co., Ltd., New Taipei City 231 (TW)
(72) Inventor: Lin, Yin Yu, New Taipei City 231 (TW); Lai, Yen Bo, New Taipei City 231 (TW)
(74) Representative: Cabinet Chaillot

(57) **Abstract**

An input system (3) is applicable to a computer (50). The input system (3) includes a wireless operating apparatus (100) and a portable electronic apparatus (200). The wireless operating apparatus (100) includes an operating unit (110) and a wireless transmitting unit (121). The operating unit (110) generates data information. The wireless transmitting unit (121) is electrically connected to the operating unit (110), and is used to transmit the data information in a wireless manner. The portable electronic apparatus (200) includes a display device (210), a wireless receiving unit (221), and a data transmission port (230). The wireless receiving unit (221) is electrically connected to the display device (210) and the data transmission port (230), and is used to receive the data information from the wireless transmitting unit (121) of the wireless operating apparatus (100). The data transmission port (230) transmits the data information to the computer (50) by using a data transmission line (56). Therefore, a portable electronic apparatus (200) is used as a wireless transceiver.

## Description

### BACKGROUND

### Technical Field

This disclosure relates to an input system, and in particular, to an input system using a portable electronic apparatus as a wireless transceiver of a computer.

### Related Art

In a computer system, a keyboard and a mouse are main operating apparatuses in the art. With the continuous advancement and improvement of computer operating systems and computer games, when using a computer or playing a video game, a user can operate and control an increasing number of functions. However, when there are more specific functions that need to be controlled, the user is more hurry-scurry during the use, so that various improved constructions and developments are constantly made for the functions and the structures of mice and keyboards.

For example, the mouse apparatus gradually develops from an early rolling ball mouse to an optical mouse, and then to a more advanced laser mouse; and a connection and communication manner between the mouse apparatus and a computer also develops from a wired connection to a wireless connection.

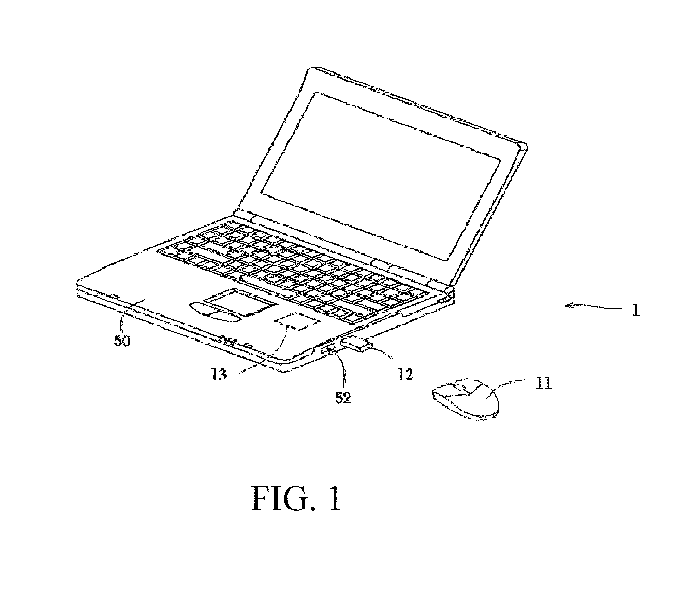

At present, a wireless mouse system is mainly applied in a computer. Refer to FIG. 1, which shows the Taiwan Utility Model No. M400615. A wireless mouse system 1 includes a wireless mouse 11, a signal receiver 12, and a determining apparatus 13. The wireless mouse 11 has a signal transmission unit (not shown in the figure). The signal receiver 12 has a signal receiving unit, a data storage unit, and a universal serial bus (USB) interface (or referred to as a USB connector; and not shown in the figure), and can be connected to a connection interface 52 of a computer 50 by using the USB connector. The wireless mouse 11 transmits an input signal to the signal receiving unit of the signal receiver 12 by using the signal transmission unit, and then transfers the input signal to the computer 50, and enables a central processing unit (CPU) 13 of the computer 50 to perform a corresponding instruction and action on the input signal. As the signal receiver 12 and the wireless mouse 11 can only be in a one-to-one correspondence, if the signal receiver 12 corresponding to the wireless mouse 11 is lost, the wireless mouse 11 cannot be used, which causes extreme use inconvenience to the user.

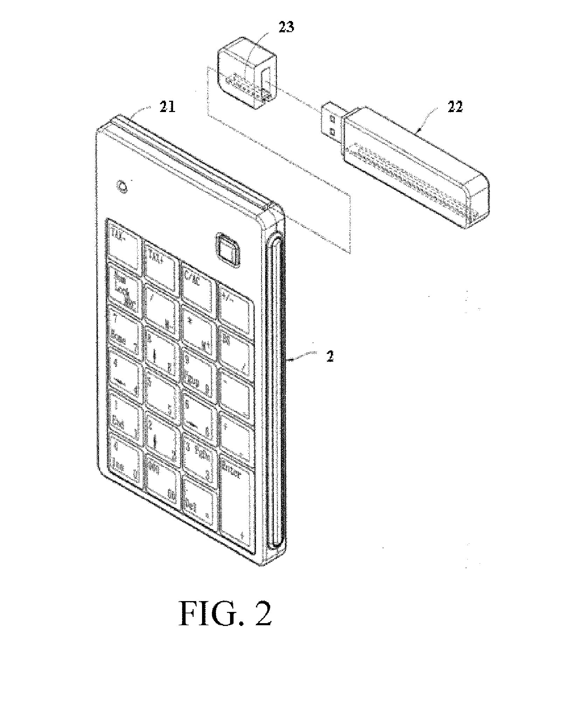

Further, FIG. 2 shows the Taiwan Utility Model No. M284965, which discloses a wireless keyboard 2 and a signal receiver 22. A connection manner between the wireless keyboard 2 and the signal receiver 22 is similar to that of the wireless mouse 11. The signal receiver 22 can be mutually engaged with a connecting portion 21 of the wireless keyboard 2 by using an assembling portion 23. When being used, the signal receiver 22 is plugged in the connection interface 52 (as shown in FIG. 1) of the computer 50, so that the wireless keyboard 2 and the signal receiver 22 can perform signal transmission with the computer 50. However, as the signal receiver 22 and the wireless keyboard 2 still need to be in a one-to-one correspondence, and they are separate components, if the signal receiver 22 is lost or not carried, the wireless keyboard 2 loses its function, which causes inconvenience to the user.

Furthermore, each of the wireless mouse system 1 or the wireless keyboard 2 needs to be matched with the signal receiver 12 or 22, which not only causes trouble to the user from the perspective of carrying, but also increases a waste of resources or increases the manufacturing cost.

Therefore, how to avoid that the wireless operating apparatus cannot be used due to the fact that the signal receiver is lost or not carried in the wireless input system, and how to reduce a waste of resources and reduce the cost are problems that this disclosure are to solve.

### SUMMARY

In view of the foregoing problems, this disclosure provides an input system, which can solve the problems that in the art that a wireless operating apparatus cannot be used due to a fact that a signal receiver is lost in an input system of the wireless operating apparatus, and use inconvenience is caused to a user.

The input system of this disclosure is applicable to a computer. The input system includes a wireless operating apparatus and a portable electronic apparatus. The wireless operating apparatus includes an operating unit and a wireless transmitting unit. The operating unit can generate data information. The wireless transmitting unit is electrically connected to the operating unit, and is used to transmit the data information in a wireless manner. The portable electronic apparatus includes a display device, a wireless receiving unit, and a data transmission port. The wireless receiving unit is electrically connected to the display device, and is used to receive the data information from the wireless transmitting unit. The data transmission port is used to transmit the data information to the computer by using a data transmission line.

In an embodiment, the wireless operating apparatus further includes a control unit. The control unit is electrically connected to the operating unit and the wireless transmitting unit, and is used to control the operation of the wireless operating apparatus.

In an embodiment, the wireless operating apparatus further includes a memory unit, electrically connected to the control unit and used to store the data information.

In an embodiment, the operating unit is a position indicating unit or at least one key.

In an embodiment, the key is a numeric key, a character key, or a function key.

In an embodiment, the wireless operating apparatus is a mouse, a stylus, or a keyboard.

In an embodiment, the portable electronic apparatus is a tablet computer, a smart phone, or a personal digital assistant.

In an embodiment, the data transmission port is a USB transmission interface, an IEEE transmission interface, or a wireless transmission interface.

In an embodiment, the portable electronic apparatus further includes a communications module, electrically connected to the data transmission port and a remote server.

In an embodiment, the portable electronic apparatus further includes a wireless relay device. The wireless relay device is electrically connected to the display device and the data transmission port. The wireless operating apparatus further includes an operating end wireless receiving unit. The wireless relay device is used to transmit a data archive from the computer to the operating end wireless receiving unit.

In an embodiment, the wireless relay device and the operating end wireless receiving unit respectively are a Bluetooth receiver and a Bluetooth transmitter, a wireless receiving module and a wireless transmitting module, a WIFI receiver and a WIFI transmitter, or an infrared receiver and an infrared transmitter that correspond to each other.

In an embodiment, the wireless transmitting unit of the wireless operating apparatus and the wireless receiving unit of the portable electronic apparatus respectively are a Bluetooth receiver and a Bluetooth transmitter, a wireless receiving module and a wireless transmitting module, a WIFI receiver and a WIFI transmitter, or an infrared receiver and an infrared transmitter that correspond to each other.

In an embodiment, the data transmission line is a wired data transmission line or a wireless data transmission line.

Based on the foregoing descriptions, an input system of this disclosure does not need to use a conventional receiver but uses a portable electronic apparatus as a receiver or a transmitter. Therefore, a user can use a wireless operating apparatus without carrying the conventional receiver. In addition, as the portable electronic apparatus is used as a transmission interface, one wireless operating apparatus may correspond to multiple portable electronic apparatuses, so that the problem in the art that a wireless operating apparatus cannot be used when a receiver is lost is solved. In addition, the portable electronic apparatus can edit data information or a data archive from the wireless operating apparatus or in the computer by using a program. In an embodiment in which the portable electronic apparatus is connected to a cloud server, the data information or the data archive in the wireless operating apparatus or the computer can be further stored in the cloud server by using the portable electronic apparatus.

### BRIEF DESCRIPTION OF THE DRAWINGS

The disclosure will become more fully understood from the detailed description given herein below for illustration only, and thus are not limitative of the disclosure, and wherein:
FIG. 1 is a schematic architectural diagram of a wireless mouse and a computer in the art;
FIG. 2 is a schematic architectural diagram of a wireless keyboard and a computer in the art;
FIG. 3 is a schematic block diagram of an input system according to this disclosure;
FIG. 4 is a schematic diagram of a stereoscopic structure of an embodiment of an input system when being used according to this disclosure; and
FIG. 5 is a schematic diagram of a stereoscopic structure of another embodiment of an input system when being used according to this disclosure.

### DETAILED DESCRIPTION

Specific implementation manners of this disclosure are described in detail below with reference to the accompanying drawings. A same sign represents a component or an apparatus having a same or similar function. An electrical connection or an electrical attachment represents a direct or an indirect electrical connection.

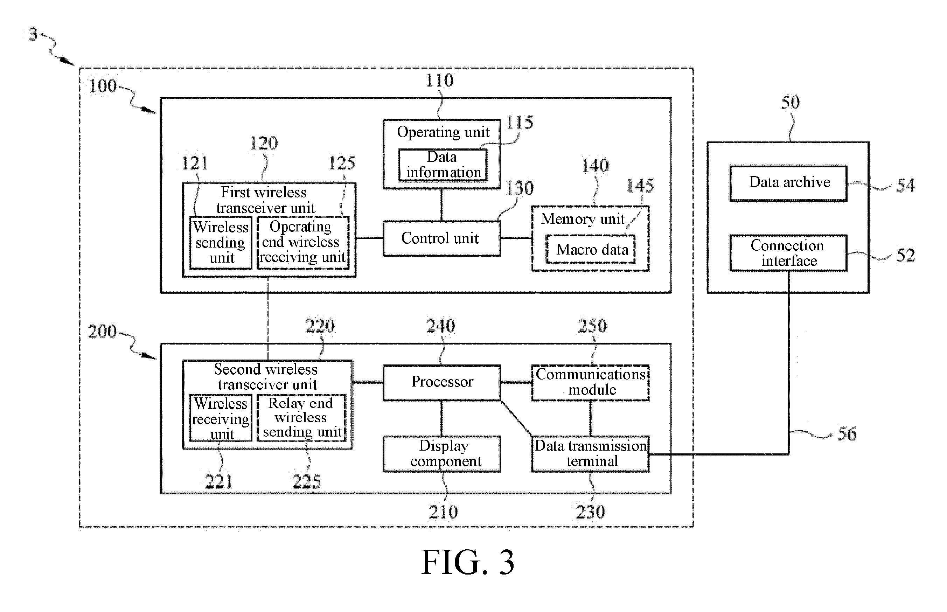

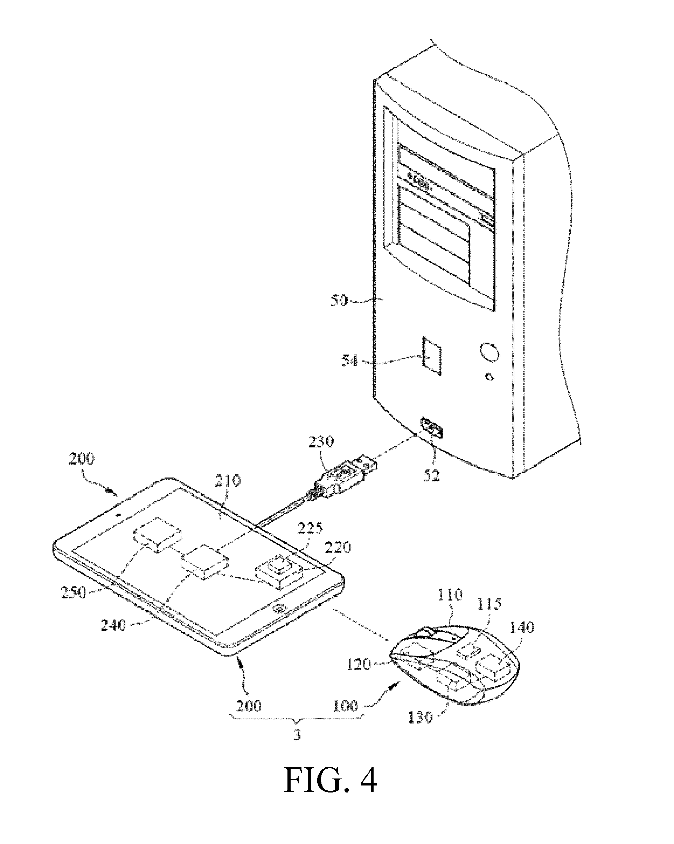

First refer to FIG. 3 and FIG. 4. FIG. 3 is a schematic diagram of components of an embodiment of an input system according to this disclosure, and FIG. 4 is a schematic diagram of a stereoscopic structure of the embodiment of the input system when being used. In this embodiment, an input system 3 is applicable to a computer 50. The computer 50 is, for example, a desk computer, a notebook computer, or a tablet computer. The input system 3 includes at least one wireless operating apparatus 100 and a portable electronic apparatus 200. The wireless operating apparatus 100 may be a mouse, a stylus, or a keyboard. The portable electronic apparatus 200 is a tablet computer, a personal digital assistant, a mobile phone, or the like.

The wireless operating apparatus 100 includes at least one operating unit 110 and a first wireless transceiver unit 120. The operating unit 110 can generate data information 115. More specifically, the operating unit 110 in this embodiment is at least one mouse button, a roller, or a position indicating unit (for example, an infrared position sensor). After being operated, the operating unit 110 generates the data information 115. The data information 115 is, for example, an operation instruction or a position signal.

The first wireless transceiver unit 120 includes at least one wireless transmitting unit 121. In another embodiment, an operating end wireless receiving unit 125 (represented by a dashed block) may be further included. The first wireless transceiver unit 120 is electrically connected to the operating unit 110, and then the wireless transmitting unit 121 is electrically connected to the operating unit 110 indirectly. The wireless transmitting unit 121 is used to transmit the data information 115 in a wireless manner.

In an embodiment of this disclosure, the wireless operating apparatus 100 may further include a control unit 130 and a memory unit 140 (represented by a dashed block), but is not limited thereto, and in another embodiment the memory unit 140 may not be disposed. The memory unit 140 may be a rewritable read-only memory or a flash memory. The memory unit 140 is used to store the data information 115 or create at least one piece of macro data 145 internally. The control unit 130 can be electrically connected to the operating unit 110, the memory unit 140, and the first wireless transceiver unit 120 separately, and then the wireless transmitting unit 121 is electrically connected to the control unit 130 indirectly. In another embodiment, the operating end wireless receiving unit 125 is also electrically connected to the control unit 130 indirectly. The control unit 130 controls the overall operation of the wireless operating apparatus 100. For example, in an embodiment, the control unit 130 controls whether to perform, by using the wireless transmitting unit 121 of the first wireless transceiver unit 120, data transmission on the data information 115 from the operating unit 110. In another embodiment, the control unit 130 can control the operating end wireless receiving unit 125 to receive an external data archive. In another embodiment, the control unit 130 controls the memory unit 140 whether to store it. The control unit 130 may be a CPU or a trajectory control unit (TCU). The wireless transmitting unit 121 of the first wireless transceiver unit 120 and the operating end wireless receiving unit 125 may respectively be a Bluetooth transmitter and a Bluetooth receiver, a wireless transmitting module and a wireless receiving module, a WIFI transmitter and a WIFI receiver, or an infrared transmitter and an infrared receiver.

The portable electronic apparatus 200 includes a display device 210, a second wireless transceiver unit 220, and a data transmission port 230. The display device 210 is a display screen. The second wireless transceiver unit 220 includes a wireless receiving unit 221. The second wireless transceiver unit 220 is electrically connected to the display device indirectly or directly, and the wireless receiving unit 221 is also electrically connected to the display device 210 and the data transmission port 230 indirectly, and is used to receive the data information 115 sent by the wireless transmitting unit 121 of the wireless operating apparatus 100. The wireless receiving unit 221 and the wireless transmitting unit 121 may respectively be a Bluetooth receiver and a Bluetooth transmitter, a wireless receiving module and a wireless transmitting module, a WIFI receiver and a WIFI transmitter, or an infrared receiver and an infrared transmitter that correspond to each other.

In another embodiment of this disclosure, the second wireless transceiver unit 220 of the portable electronic apparatus 200 may further include a wireless relay device 225 (represented by a dashed block). The wireless relay device 225 is electrically connected to the display device and the data transmission port, and may be used to transmit a data archive 54 from the computer 50 and transfer the data archive 54 to the operating end wireless receiving unit 125 of the first wireless transceiver unit 120 of the wireless operating apparatus 100. In this way, the wireless operating apparatus 100 can receive the data archive 54 from the computer 50.

The operating end wireless receiving unit 125 and the wireless relay device 225 may respectively be a Bluetooth receiver and a Bluetooth transmitter, a wireless receiving module and a wireless transmitting module, a WIFI receiver and a WIFI transmitter, or an infrared receiver and an infrared transmitter that correspond to each other. For example, in an embodiment, if the wireless transmitting unit 121 is a Bluetooth transmitter, the wireless receiving unit 221 is a Bluetooth receiver; and if the wireless relay device 225 is a WIFI transmitter, the operating end wireless receiving unit 125 is a WIFI receiver.

The data transmission port 230 transmits the data information 115 to the computer 50 by using a wired or a wireless data transmission line 56. More specifically, the data transmission port 230 is a USB transmission interface, but is not limited thereto. In another embodiment, the data transmission port 230 may also be an IEEE transmission interface or a wireless transmission interface, and corresponds to a connection interface 52 of the computer 50. Therefore, the data information 115 or the macro data 145 is transmitted to the computer 50 by using the data transmission line 56, or the data archive 54 from the computer 50 is transmitted to the wireless operating apparatus 100 by using the data transmission port 230 of the portable electronic apparatus 200 indirectly.

More specifically, the portable electronic apparatus 200 further includes a processor 240. The processor 240 is electrically connected to the second wireless transceiver unit 220, the display device 210, and the data transmission port 230 separately. The processor 240 is used to process the overall operation of the portable electronic apparatus 200. For example, in an embodiment, the processor 240 controls the data transmission port 230 whether to receive the data archive 54 from the computer 50. In another embodiment, the processor 240 controls signal receiving or transmitting of the second wireless transceiver unit 220. In addition, in another embodiment, the portable electronic apparatus 200 may further edit the data archive 54 from the computer 50 or the data information 115 from the wireless operating apparatus 100 by using the processor 240 or a software program.

In another embodiment of this disclosure, the portable electronic apparatus 200 further includes a communications module 250 (represented by a dashed block), which is electrically connected to the processor 240 and the data transmission port 230 separately. The communications module 250 is electrically connected to a remote server (not shown in the figure). The remote server may store the data archive 54 from the computer 50, or the data information 115 or the macro data 145 from the wireless operating apparatus 100. Therefore, the data information 115 or the data archive 54 can be synchronously stored in the remote server by using the input system 3 of this disclosure. In addition, the data archive 54 or the data information 115 in the remote server can be edited by using another computer, and is then transmitted to the portable electronic apparatus 200 by using the communications module 250. Therefore, by using the portable electronic apparatus 200, the edited data archive 54 or data information 115 can be transmitted to the wireless operating apparatus 100 by using the second wireless transceiver unit 220 and the first wireless transceiver unit 120, or transmitted to the computer 50 by using the data transmission port 230. The data information 115 or the data archive 54 may be an operation instruction, macro information, position information, or the like.

The foregoing first embodiment discloses a preferred implementation state of this disclosure, but this disclosure is not limited thereto. In other words, as long as a portable electronic apparatus 200 is used as a wireless receiver and/or transmitter of the wireless operating apparatus 100 to replace the common signal transceiver 12 or 22, the risk that the user cannot use the wireless operating apparatus due to loss of the signal transceiver can be reduced, and as the portable electronic apparatus 200 is used to replace the signal transceiver 12 or 22, the manufacturing cost or a waste of resources is reduced. A second embodiment is further listed below for reference, so as to better understand the spirit of this disclosure.

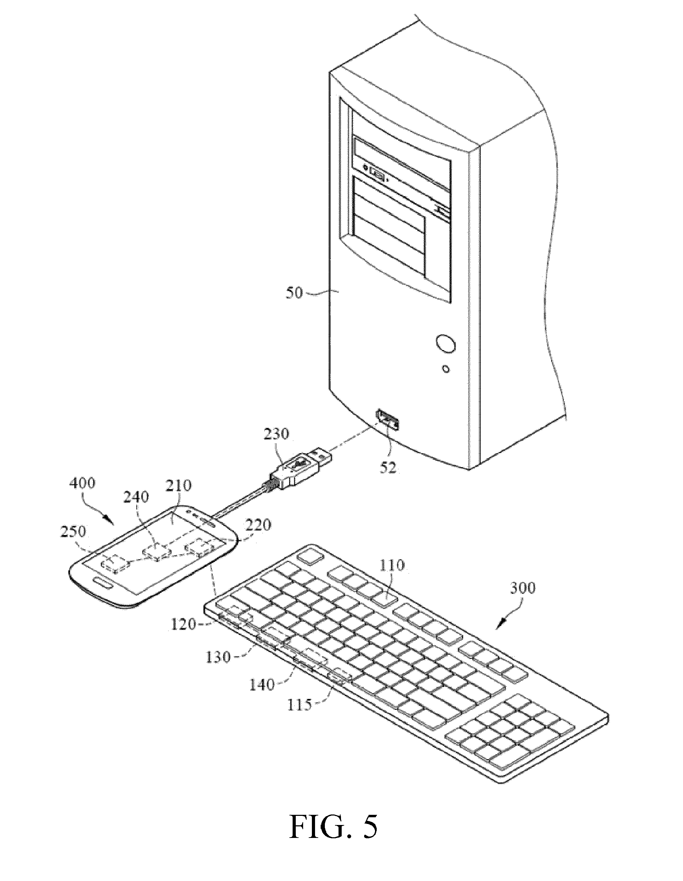

Refer to FIG. 3 and FIG. 5. FIG. 5 is a schematic diagram of a stereoscopic structure of another embodiment when being used according to this disclosure. In this embodiment, a sign which is same as that in the first embodiment or is unmarked represents a same or similar function. Only differences are described below. A wireless operating apparatus 300 in the second embodiment is a wireless keyboard. A portable electronic apparatus 400 is a mobile phone. An operating unit 110 in the second embodiment is multiple keys (among which only one is marked in the figures) on the keyboard. More specifically, the operating unit 110 may be a numeric key, a character key, or a function key. The operating unit 110 is actuated by external force and then generates data information 115. The data information 115 in this embodiment may be an operation instruction, digital information, and/or character information, and the like.

The portable electronic apparatus of the input system of this disclosure is used as a receive end or a transmit end of the wireless operating apparatus, so that the problem in the art that when a wireless receiver that is in a one-to-one correspondence to the wireless operating apparatus is lost, the wireless operating apparatus cannot be used and another wireless receiver has to be found is alleviated, and convenience of a user is improved. In addition, in some embodiments, extra effects are included and are listed below:
First, the portable electronic apparatus 200 can edit the data information 115 from the wireless operating apparatus 100 and can also edit the data archive 54 from the computer 50 by using the processor 240 and/or program software.
Second, the portable electronic apparatus 200 is electrically connected to a remote server by using the communications module 250. Therefore, the data information 115 from the wireless operating apparatus 100 or the data archive 54 from the computer 50 may be synchronously stored in the remote server. In addition, the user can also edit, by using an external computer, information stored in the remote server, so that the data information 115 in the wireless operating apparatus 100 or the data archive 54 can be updated synchronously and indirectly.
Third, in an embodiment in which the wireless operating apparatus 100 is provided with the memory unit 140, the data information 115 or the data archive 54 may also be stored in the memory unit 140, so that the user can directly carry the wireless operating apparatus 100 to connect to another computer for use.

## Claims

1. An input system (3), applicable to a computer (50), comprising:
a wireless operating apparatus (100), including an operating unit (110) and a wireless transmitting unit (121); wherein the wireless transmitting unit (121) is electrically connected to the operating unit (110), the operating unit (110) generates data information, and the wireless transmitting unit (121) transmits the data information in a wireless manner; and
a portable electronic apparatus (200), including a display device (210), a wireless receiving unit (221), and a data transmission port (230); wherein the wireless receiving unit (221) is electrically connected to the display device (210) and the data transmission port (230), the wireless receiving unit (221) receives the data information from the wireless operating apparatus (100), and the data transmission port (230) transmits the data information to the computer (50) by using a data transmission line (56).

2. The input system (3) as claimed in Claim 1, wherein the wireless operating apparatus (100) includes a control unit (130), the control unit (130) is electrically connected to the operating unit (110) and the wireless transmitting unit (121).

3. The input system (3) as claimed in Claim 2, wherein the wireless operating apparatus (100) includes a memory unit (140), the memory unit (140) is electrically connected to the control unit (130).

4. The input system (3) as claimed in Claim 1, wherein the operating unit (110) is a position indicating unit or at least one key.

5. The input system (3) as claimed in Claim 4, wherein the key is a numeric key, a character key, or a function key.

6. The input system (3) as claimed in Claim 1, wherein the wireless operating apparatus (100) is a mouse, a stylus, or a keyboard.

7. The input system (3) as claimed in Claim 1, wherein the portable electronic apparatus (200) is a tablet computer (50), a mobile phone, or a personal digital assistant.

8. The input system (3) as claimed in Claim 1, wherein the data transmission port (230) is a universal serial bus transmission interface, an IEEE transmission interface, or a wireless transmission interface.

9. The input system (3) as claimed in Claim 1, wherein the portable electronic apparatus (200) includes a communications module (250), the communications module (250) is electrically connected to the data transmission port (230) and a remote server.

10. The input system (3) as claimed in Claim 1, wherein the portable electronic apparatus (200) includes a wireless relay device (225), the wireless relay device (225) is electrically connected to the display device (210) and the data transmission port (230), the wireless operating apparatus (100) includes an operating end wireless receiving unit (221), and the wireless relay device (225) transmits data archive from the computer (50) to the operating end wireless receiving unit (221).

11. The input system (3) as claimed in Claim 10, wherein the operating end wireless receiving unit (221) and the wireless relay device (225) respectively are a Bluetooth receiver and a Bluetooth transmitter, a wireless receiving module and a wireless transmitting module, a WIFI receiver and a WIFI transmitter, or an infrared receiver and an infrared transmitter.

12. The input system (3) as claimed in Claim 1, wherein the wireless receiving unit (221) of the portable electronic apparatus (200) and the wireless transmitting unit (121) of the wireless operating apparatus (100) respectively are a Bluetooth receiver and a Bluetooth transmitter, a wireless receiving module and a wireless transmitting module, a WIFI receiver and a WIFI transmitter, or an infrared receiver and an infrared transmitter.

13. The input system (3) as claimed in Claim 1, wherein the data transmission line (56) is a wired data transmission line or a wireless data transmission line.
